(19) Europäisches Patentamt
European Patent Office
Office européen des brevets

(11) EP 3 572 563 A1

(12) **EUROPEAN PATENT APPLICATION**

(43) Date of publication:
**27.11.2019 Bulletin 2019/48**

(51) Int Cl.:
*D01F 1/04* (2006.01)   *B29C 45/00* (2006.01)
*C08J 3/20* (2006.01)    *C08J 3/205* (2006.01)
*E01C 13/08* (2006.01)

(21) Application number: **18174153.9**

(22) Date of filing: **24.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Polytex Sportbeläge
Produktions-GmbH
47929 Grefrath (DE)**

(72) Inventors:
• SICK, Stephan
  47877 Willich-Neersen (DE)
• SCHMITZ, Dirk
  47652 Weeze (DE)
• SANDER, Dirk
  47647 Kerken (DE)

(74) Representative: **Richardt Patentanwälte PartG
mbB
Wilhelmstraße 7
65185 Wiesbaden (DE)**

(54) **MANUFACTURING OF AN ARTIFICIAL TURF FIBER OF A PARTICULAR COLOR**

(57)    The invention relates to a method of manufacturing an extruded artificial turf fiber (202) of a particular color. The method comprises selecting (102) one or more pigments (254); providing (104) a first mixture (259) comprising the selected one or more pigments, oil (252), and polymer granules (250); shaking (106) the first mixture to obtain first coated granules (262), being the polymer granules coated with a dispersion of the selected one or more pigments within the oil; providing (108) a second mixture (261) comprising the first coated granules (262) and a separating agent (266); shaking (110) the second mixture to obtain second coated granules (268), being the first granules additionally coated with the separating agent; injecting (112) the second coated granules into a mold for manufacturing a color selection article in an injection molding process; if the color of the color selection article matches the particular color, providing (114) a third mixture (274) comprising one or more fiber pigments (254') and a fiber polymer, the one or more fiber pigments being the same type of pigments as the selected one or more pigments, and the fiber polymer being the same type of polymer as the polymer of the polymer granules (250); and manufacturing (116) the artificial turf fiber from the third mixture in an extrusion process.

Fig. 3

## Description

### Field of the invention

The invention relates to a method for rapidly manufacturing an artificial turf fiber of a particular desired color.

### Background and related art

Artificial turf, or artificial grass, is a surface that is made up of fibers and is used to replace grass. The structure of artificial turf is designed to resemble natural grass. Typically, artificial turf is used as a playing surface for sports such as soccer, American football, rugby, tennis, and golf, and for other playing fields and exercise fields. Furthermore, artificial turf is frequently used for landscaping applications. An advantage of using artificial turf is that it eliminates the maintenance, including regular mowing, scarifying, fertilizing, and watering, required for a grass playing or landscaping surface.

The wide range of applications for artificial turf is matched by at least as wide a range of available pigments, pigment mixtures, and other substances used to give the artificial turf fibers a desired color. The product portfolios of most manufacturers of artificial turf now include not only many different shades of green, but also a broad spectrum of other colors. In some cases, manufacturers of artificial turf even offer to produce artificial turf in custom colors or patterns specified by the customer. For example, a customer may wish to equip a playing field with artificial turf containing a club logo, an advertisement, or certain markings in a selected color.

However, the production of artificial turf according to the exact color requirements of the customer is often technically difficult, expensive, and tedious for several reasons.

One reason for this difficulty is that artificial turf fibers are often produced by extrusion in an extrusion machine. To test whether a particular pigment mixture will produce an artificial turf fiber matching the color desired by the customer, a comparatively large polymer mass with a corresponding pigment composition must be produced for each artificial turf fiber color sample in order to fill the extrusion machine sufficiently to carry out the extrusion process. In addition, after each extrusion, the machine has to be cleaned in order to prevent contamination of the next extruded polymer mass by the pigments from the previous mass, which could result in color deviations from the sample in the final product. Hence, a significant amount of time and money must be spent for testing whether particular pigment mixtures produce the desired color. For many colors, it may be necessary to mix two, three or even four different pigments, and for each combination of pigments, the respective amounts of the individual pigments may vary, so it is often necessary to produce and test many pigment combinations differing from each other in the type and/or amount of the pigments they contain. For each pigment combination to be tested, large amounts of polymer and pigments are consumed in order to be able to operate the extrusion machine, and after the extrusion process, the extrusion machine and the extrusion heads need to be thoroughly cleaned in order to ensure that no remnants of a previously tested polymer-pigment mass modify the color of the subsequently tested pigment composition. Furthermore, many pigments are expensive. For these reasons, the currently known method for determining a pigment composition that produces an artificial turf fiber of exactly the desired color is an expensive, time-consuming process.

Another problem in the production of a specific color is that the color of the pigments, even if consistently purchased from the same manufacturer, can vary depending on the batch.

## Summary

An objective of the present invention is to provide for an improved method of manufacturing an extruded artificial turf fiber having a particular desired color and for a producing a corresponding color selection article, as specified in the independent claims. Embodiments of the invention are given in the dependent claims. Embodiments of the present invention can be freely combined with each other if they are not mutually exclusive.

In one aspect, the invention relates to a method of manufacturing an extruded artificial turf fiber of a particular color. The method comprises: selecting one or more pigments; providing a first mixture comprising the selected one or more pigments, oil, and polymer granules; shaking the first mixture to obtain "first coated" granules, being the polymer granules coated with a dispersion of the selected one or more pigments within the oil; providing a second mixture comprising the first-coated granules and a separating agent; shaking the second mixture to obtain "second coated" granules, the second coated granules being the first granules being in addition coated with the separating agent; injecting the second-coated granules into a mold to manufacture a color selection article in an injection molding process; if the color of the resulting color selection article matches the particular color, providing a third mixture comprising one or more fiber pigments and a fiber polymer, the one or more fiber pigments being of the same type as the selected one or more pigments, and the fiber polymer being the same type as that of the polymer granules; and manufacturing the artificial turf fiber from the third mixture in an extrusion process.

Said features may be advantageous because it may greatly reduce the amount of polymer and pigments needed in order to test whether a particular pigment combination generates a desired color. For example, a foil extruder often requires at least 30 kg of polymer material comprising the respective pigments to be tested, and a monofilament extrusion machine may require at least 1 kg of polymer material. In contrast, 30 g-50 g of polymer may be sufficient for filling an injection mold, and about 100 g-200 g or less of polymer (mixed with respective pigments) may be sufficient to provide a homogeneously mixed second mixture. Hence, the material costs associated with the testing of each pigment combination are greatly reduced.

In addition, the method may greatly reduce the time necessary for testing whether particular pigment combinations generate a desired color because it eliminates the need to perform an extrusion process and clean the extrusion head afterwards. Injection molding requires a significantly smaller amount of polymer and can be performed in a comparatively short time; hence, the time to production is reduced. In addition, or alternatively, the method can be used for rapidly manufacturing a plurality of color selection articles based on slightly different pigment compositions. Hence, it is possible to quickly provide and test a variety of similar pigment compositions and quickly identify the one whose color is the closest to the desired color. The pigment composition of this identified color selection article can then be used to create the third mixture, which is used in an extrusion process to manufacture the actual artificial turf fiber.

As an additional benefit of the process, the shaking of the polymer granules in the pigment-oil dispersion and in the separating agent may be beneficial, as these measures homogeneously distribute the pigments in the second mixture, thereby ensuring that they are also homogeneously mixed in the molten polymer mass injected into the mold for manufacturing the color selection article. Often, the polymers used in an extrusion process are not suited for injection molding because of their comparatively high viscosity. Injection molding requires the polymer mass to have low viscosity to ensure that the mass completely fills all edges of the mold. Adding pigments in combination with oil and thoroughly shaking the first mixture ensures not only that the pigments are homogeneously dispersed in the oil, but also that all polymer granules are homogeneously coated with the oil-pigment dispersion. This ensures that the pigments are homogeneously distributed in the color selection article and that the polymer is sufficiently liquid to penetrate to all the edges, even those of thin, filigree-structured molds.

Homogeneously distributing pigments in a large polymer mass is a challenge for multiple reasons. First, the amount of pigment used is very small compared to the mass of the polymer. Moreover, the polymer granules themselves are preferably free of any pigments and may be comparatively large, i.e., more than 3 mm in diameter, in some cases more than 7 mm in diameter. Hence, there is a high risk that the pigments are not mixed homogeneously in the polymer mass because the pigments clot together and/or because the polymer granules represent pigment-free regions unless they are thoroughly mixed with the pigments before they are injected. However, the high temperatures required for providing a liquid polymer mixture ("second mixture") that is liquid enough to be usable in an injection molding process have been observed to damage at least some types of pigments commonly used for producing artificial turf fibers. For example, some metallic pigments have been observed to be sensitive to destruction at the high temperatures used in an injection molding process. Hence, using an oil in combination with the separating agent ensures that the pigments are homogeneously distributed within the second mixture before it is molten. When the second mixture is molten during the injection mold process, the oil in particular then ensures that the pigments get quickly and homogeneously distributed within the liquid second mixture. Hence, the oil and the separating agent ensure that the pigments need to be exposed to high temperatures for only a short time before they are injected into the mold. The oil and the separating agent ensure that the pigments are quickly distributed homogeneously in the liquid second mixture, thereby producing a color selection article with a homogeneous, reproducible color.

The shaking of the first and/or the second mixture may ensure that the first and/or second granules repeatedly attach and detach from one another while being shaken, thereby ensuring that the first coating (consisting of the pigment-oil dispersion) is of approximately the same thickness on all granules and that the second mixture is basically free of pigment-oil suspension clots that could result in a non-homogeneous distribution of the pigments within the molten polymer of the polymer granules.

It should be noted that the generation of a homogeneous pigment distribution within a polymer mass is by no means trivial. In the context of an extrusion process, it is common to homogeneously mix colorless polymer granules with one or more pigments and optional additives in an extruder, extrude the mixture into a concentrated polymer extrusion product, and generate granules from the extrusion product. These granules are called the "master batch." The master batch is then mixed with additional ("further") polymer granules that are basically free of pigments or other additives, and undergoes a second extrusion step to produce the end extrusion product, i.e., an artificial turf fiber. Hence, in a conventional extrusion workflow, two subsequent mixing and extrusion steps are necessary to ensure that the pigments are homogeneously mixed. Embodiments of this invention may allow for production of a homogeneous distribution of pigments in a polymer without the need to perform an extrusion step for producing a homogeneous pigment-polymer mixture and to mix the pigment-polymer mixture for a long time under high temperatures. This may not only save time and material costs, but may also avoid or minimize any temperature-induced damage to the pigments.

The mixing time for mixing the oil, the one or more pigments and the polymer granules depends on the type and mass of the pigments. The higher the mass and the higher the organic content, the longer the mixing time. Typically, a mixing time of about 2-20 minutes will be sufficient for coating all polymer granules with a homogeneously mixed pigment-in-oil dispersion.

According to embodiments, the polymer granules themselves are free of any pigments. For example, the polymer granules can be transparent and colorless. Preferably, the polymer granules are also free of any additives that could affect the color of the color selection article. Colorless granules may be advantageous, as they can be mixed freely with any combination of pigments, In any case, it is ensured that the resulting color is generated by the pigment combination used and explicitly added, not by any pigments or other substances contained in the polymer granules. This may ensure that the desired color can be obtained reproducibly by a particular pigment combination.

According to embodiments, the weight ratio of the fiber pigments to the fiber polymer is identical to the weight ratio of the one or more selected pigments to the polymer granules. For example, if a particular ratio of the total weight of the one or more selected pigments to the weight of the polymer granules used to produce the second mixture is found to result in a color selection article having the desired color, the same pigment:polymer ratio can be used when selecting the fiber pigments and fiber polymer for producing the third mixture to be used for manufacturing, in an extrusion process, an artificial turf fiber matching the color of the selection article.

According to embodiments, the fiber polymer and the polymer granules are the same type of polymer selected from a group comprising polyethylene, polypropylene, polyamide, or a mixture thereof.

For example, when the polymer granules used for providing the second mixture are made of polyethylene, the fiber polymer is also polyethylene. When the polymer granules used to provide the second mixture are polypropylene, the fiber polymer is also polypropylene. When the polymer granules used for providing the second mixture are polyamide granules, the fiber polymer is also polyamide. When the polymer granules used for providing the second mixture are polyethylene-polyamide-blend granules, the fiber polymer also consists of this polyethylene-polyamide blend. In some embodiments, there may be minor chemical differences between the polymer of the polymer granules and that of the fiber polymer. For example, both the polymer of the polymer granules and the fiber polymer could be polyethylene, but the polymer of the polymer granules could be a polyethylene subtype that is less viscous than the polyethylene subtype used to produce the fiber polymer. Preferably, the polymer subtypes used to create the granules and the fiber polymer respectively may differ only if both have basically the same optical properties. This may ensure that the same pigment composition and pigment:polymer ratio used for manufacturing a color selection article of a desired color will produce an extruded artificial turf fiber of the same color.

According to embodiments, the fiber polymer and the polymer granules are of the same type of polymer. The polymer granules, the first mixture and/or the second mixture used for manufacturing the color selection article in an injection molding process in addition comprise a rheological additive that is not contained in the third polymer mixture used for extruding the artificial turf fiber. The rheological additive is used to reduce the viscosity of the second mixture in molten state during injection molding below the viscosity of the third mixture in molten state during extrusion.

The oil contained in the second mixture used for manufacturing the color selection article and that is absent in the third mixture used for manufacturing the artificial turf fiber may already act as a rheological additive that reduces the viscosity of the molten second mixture. In some embodiments, the second mixture or its components may in addition comprise additional substances adapted to reduce the viscosity of the molten second mixture. For example, the rheological additive can be a metal nanoparticle (Rusheet, SD. Application of Nanoparticle Saturated Injectant Gases for EOR of Heavy Oils, SPE, 2009;129539) or liquid soap.

According to embodiments, the second mixture in molten state during injection molding has a melt flow index of 2.0-3.0 grams/10 minutes, in particular 2.5 grams/10 minutes. For example, the polymer can be polyethylene and the MFI can be determined at a temperature of 190°C. In case another type of polymer is used, the temperature used for determining the MFI is adapted accordingly, e.g. to 230°C for polypropylene.

According to embodiments, the generation of the artificial turf fiber from the third mixture comprises extruding the third mixture into a monofilament and using the monofilament, or a bundle of monofilaments, as the artificial turf fiber.

According to embodiments, the generation of the artificial turf fiber from the third mixture comprises extruding the third mixture into a film, slicing the film into slices, and using one or more of the slices as the artificial turf fiber.

According to embodiments, the oil is transparent and preferably colorless. For example, the oil can be a mineral oil. Preferably, the oil is a transparent, colorless oil, composed mainly of alkanes and cycloalkanes, related to petroleum jelly. For example, this oil can be obtained as a liquid byproduct of refining crude oil to make gasoline and other petroleum products. According to some example embodiments, the oil has a density of around $0.7 \text{ g/cm}^3$ to $0.9 \text{ g/cm}^3$.

According to embodiments, the separating agent is a mixture of wax and chalk. This may be advantageous as these two substances in combination have been observed to ensure that the second granules do not clot together. This may help ensure that no oil-pigment clot forms within the second mixture that would constitute a non-homogeneous aggregation of the pigment in a particular region of the second mixture. In particular, the wax may allow for a good dispersion of the coated granules, and the chalk may prevent the oil from gluing together the first coated granules. Preferably, the wax and the chalk are added at the same time.

According to embodiments, the first and second mixtures are created at room temperature, e.g., between 15°C and 25°C. The shaking process is also performed at room temperature. The shaking may be performed continuously throughout the whole process of providing the first and the second mixtures and the second-coated granules. Optionally, the shaking may be interrupted while individual components are added. However, leaving the first or second mixture unshaken for more than 2 minutes should be avoided to prevent the separation of the different components.

According to embodiments, the wax is polyethylene-wax. Preferably, the wax has a density of 0.94 to 0.96 g/cm$^3$ and a melting point between 110°C and 120°C. A wax of this density and melting point has been observed to have particularly good separation capabilities.

Polyethylene wax, or "PE wax," is a polyethylene homopolymer wax. PE waxes typically are bright, relatively hard and crystalline waxes, and are prepared synthetically from polyethylene. In nonpolar form, they can be derived from the low-pressure process with Ziegler-Natta catalysts, and in polar form, they can be manufactured by melt oxidation. Using a PE wax may have the further beneficial effect of reducing the viscosity of the molten second mixture.

According to embodiments, the ratio of the weight of the oil to the weight of the polymer granules is in the range of $\frac{0.05}{200}$ to $\frac{2.5}{200}$ , preferably $\frac{0.25}{200}$ to $\frac{0.6}{200}$ , preferably $\frac{0.5}{200}$. According to embodiments, the ratio of the total weight of the one or more selected pigments to the weight of the polymer granules being in the range of $\frac{0.3}{200}$ to $\frac{25}{200}$ , and preferably $\frac{1}{200}$ to $\frac{15}{200}$ .

According to embodiments, the ratio of the weight of the wax to the weight of the polymer granules is in the range of $\frac{0.3}{200}$ to $\frac{1.5}{200}$ , and preferably $\frac{0.5}{200}$ to $\frac{0.7}{200}$ . According to embodiments, the ratio of the weight of the chalk to the weight of the polymer granules being in the range of $\frac{0.5}{200}$ to $\frac{5}{200}$ , and preferably $\frac{1.5}{200}$ to $\frac{2.5}{200}$ .

According to embodiments, the second mixture in total having a weight of less than 500 g, and preferably less than 250 g.

According to embodiments, the second mixture comprises:

- 0.227%-0.25% by weight: the oil;
- 0.45%-7.4% by weight: the one or more selected pigments;
- 0.227%-0.34% by weight: the wax;
- 0.68%-1.23% by weight: the chalk, the wax and the chalk in combination acting as the separating agent;
- more than 90% by weight the polymer granules.

According to embodiments, the thickness of the mold used for manufacturing the color selection article in the injection molding process is identical to the thickness of the manufactured artificial turf fiber +/-10%. This may be advantageous as the thickness of artificial turf fibers is typically below 500 $\mu$m. This may result in a semitransparent look in the fiber as well as the color selection article. Producing a very thin color selection article provides a more realistic color impression of the fiber to be manufactured. However, the use of very thin injection molds for sample creation is technically challenging because the liquid polymer mass may cool and harden before it has completely filled all edges and depressions of the mold, yet if the injection molding temperature is set too high, the polymer and/or pigments may be damaged. But by shaking the polymer granules in an oil-pigment dispersion and later in a separator, it may be ensured that the pigments are homogeneously distributed even when the time during which the second mixture is exposed to very high temperatures (220°C-265°C, preferably at about 250°C) is very short, preferably less than several minutes, e.g. less than three minutes.

The homogeneous distribution of small amounts of pigments in polymer granules for injection molding has been observed to be technically highly difficult, particularly when using thin molds, because in a very thin mold, even minor non-homogeneities will lead to a spotty, irregular color pattern in the color selection article. The use of oil may be beneficial in the context of injection molding in a very thin mold, because oil may not only help distribute the pigments homogeneously in the second mixture to be used for injection molding, it may also reduce the viscosity of the mixture, thereby ensuring that the second mixture is liquid enough to reach all edges and depressions of the mold before the polymer hardens.

According to embodiments, the method further comprises:

- selecting one or more further pigments, the one or more further pigments differing in type and/or amount of at least one pigment from the one or more selected pigments;
- providing a further first mixture, the further first mixture comprising the selected one or more further pigments, further oil, and further polymer granules;
- shaking the further first mixture to obtain further first coated granules, the further first coated granules being the further polymer granules coated with a dispersion of the selected one or more further pigments within the further oil;

- providing a further second mixture, the further second mixture comprising the further first-coated granules and a further separating agent;
- shaking the further second mixture for obtaining further second-coated granules, the further second-coated granules being the further first granules being in addition coated with the further separating agent;
- injecting the further second-coated granules into a mold for manufacturing a further color selection article in an injection molding process;
- if the color of the further color selection article is more similar to the particular color than the color of the color selection article, providing the third mixture such that the one or more fiber pigments are the same type of pigments as the selected one or more further pigments.

In a further aspect, the invention relates to a color selection article for selecting the color of an artificial turf fiber. The color selection article is an injection molded polymer product comprising one or more pigments, oil, and a separating agent. The separating agent is adapted to separate polymer granules coated with a dispersion of pigments in oil from each other.

According to embodiments, the color selection article is manufactured in accordance with respective steps for manufacturing a color selection article contained in the method for manufacturing an artificial turf fiber having a particular color as described herein for embodiments of the invention. The color selection article can have the composition of the second mixture described herein for embodiments of the invention.

This may be advantageous, as an injection-molding-based color selection article can be manufactured much faster and much less expensively than an extrusion-based color selection article or artificial turf fiber prototype.

According to embodiments, the color selection article is an injection-molded product comprising a defined amount of one or more first pigments and at least a first area having a thickness in the range of +/-20% of the fiber thickness of the artificial turf fiber to be manufactured.

For example, the thickness of the color selection article or the thickness of at least a region of the color selection article is identical or very similar to the thickness of the artificial fiber that will be produced. This may be advantageous, as the color of the fiber to be produced will more faithfully reflect the color of the color selection article, because the color selection article is as thin and as transparent as the fiber to be produced. Thus, the color of the color selection article will provide a highly realistic impression of the color of the artificial turf fiber that will be created, because the color selection article as well as the artificial turf fiber may be at least partially transparent, and the transparency may also affect the color impression.

The thickness of the color selection article may be similar to an artificial turf fiber, and the length and width of the color selection article preferably do not exceed 10 cm. Thus, a sales representative may use a kit comprising a small number of artificial turf fiber samples for demonstrating the physical and mechanical properties of the fibers and comprising one or more, e.g. more than 20, or even more than 40 samples for demonstrating various options of the colors that can be ordered. Typically, the color palette offered by far exceeds the number of fiber types and thicknesses, so embodiments of the invention may provide for a compact but nevertheless exhaustive kit that enables a customer to select a fiber and fiber color that suits his or her needs.

According to embodiments, the color selection article has a stepped shape profile that comprises at least two steps. Each step corresponds to a defined thickness of the color selection article, and the first area corresponds to one of the steps. Thus, each area corresponding to a step is oriented parallel to the base area of the color selection article and represents a particular level and thickness of the color selection article. This may be advantageous, because a single color selection article covers multiple degrees of transparence/opacity for a single color; these correspond to the multiple fiber types and fiber thicknesses that a manufacturer of artificial turf fibers may offer. Thus, the customer gets a more realistic idea of the color impression of a particular pigment composition assuming a particular thickness of the artificial turf fiber.

According to embodiments, the thickness of the manufactured artificial turf fiber is between 100$\mu$m and 400$\mu$m. Accordingly, the mold used for manufacturing the color selection article preferably has a thickness ("height") of between 100$\mu$m and 400$\mu$m.

According to embodiments, the stepped shape profile of the color selection article and of the mold used for creating the same comprises at least three steps, each corresponding to a different thickness, selected from a group comprising 100$\mu$m, 150$\mu$m, 200$\mu$m, 250$\mu$m, 300$\mu$m, 350$\mu$m, and 400$\mu$m.

According to embodiments, the injection-molded product is a high-pressure injection-molded product; the injection molding can be performed at temperatures above 210°C, preferably between 210°C and 265°C, e.g., 250°C. The injection molding can be performed at a pressure of 300 and 480 bar. For example, the injection and holding pressure is between 300 and 480 bar, in particular between 350 and 400 bar.

According to embodiments, the artificial turf fiber is to be made of a type of polymer referred herein as an "extrusion polymer." The extrusion polymer is a polymer adapted for forming the artificial turf fiber in a process comprising an extrusion step. Specifically, the extrusion polymer can be polyethylene or a mixture of polyethylene and polyamide.

According to embodiments, the injection-molded color selection article (and the polymer granules used for the generation of the color selection article) is made of a polymer referred to herein as "injection-molding polymer." Preferably, the injection molding polymer is of the same type, or a very similar type, of polymer as the extrusion polymer, e.g., polyethylene or polyamide, or a mixture thereof.

According to embodiments, the injection-molding polymer and/or the extrusion polymer are selected from a group comprising polyethylene, ABS, polypropylene, polyoxymethylene, polycarbonate, nylon polymer material and blends of any one of said polymers. Preferably, to reduce unexpected color changes induced by the polymer, the extrusion polymer and the injection-molding polymer basically consist of the same or very similar polymer types, for example, two PEs that may differ slightly in respect to the length and number of branches, such that the PE version used for injection molding has a lower viscosity than the PE version used for the extrusion.

The term **"injection molding"** as used herein is a manufacturing process that comprises a step of injecting molten material, in particular, a polymer or polymer mixture, into a mold. The polymer material is fed into a heated barrel, mixed (using, e.g. a helical shaped screw), and injected (forced) into a mold cavity, where it cools and hardens to the configuration of the cavity. Typically, the mold is made by a mold-maker from metal, usually either steel or aluminum. Injection molding is widely used for manufacturing a variety of parts, e.g., tools or automobile parts, but has not yet been used for the generation of color selection articles in the context of artificial turf fiber production.

A **"color selection article"** (or "color selection sample") as used herein is a product, preferably a polymer-based product, with a material of known composition. In particular, the color selection article comprises a known amount of one or more pigments and a known amount of one or more polymers. Preferably, a color selection article is manufactured in a defined and reproducible process that enables the manufacture of many color selection articles of the same type and composition such that all said articles have the same known and empirically determined color. A color selection article can be an element of a color selection kit comprising many color selection articles of different colors. In addition, the color selection kit in some embodiments can comprise one or more artificial turf fiber samples.

A **"color selection kit"** as used herein comprises one or more color selection articles and one or more artificial turf fiber samples. If the kit comprises multiple color selection articles, the color selection articles are of different colors. If the kit comprises multiple artificial turf fiber samples, the samples preferably have different fiber thicknesses.

A **"pigment"** as used herein is a substance that changes the color of reflected or transmitted light. The term as used herein should be interpreted broadly as any substance that changes the color of light as the result of wavelength-selective absorption, fluorescence, phosphorescence, and other forms of luminescence in which a pigment, or the material interacting with it, emits light. According to embodiments, a pigment is a substance that humans have chosen and developed for coloring other materials. These substances usually have special properties that make them ideal for coloring other materials. Many pigments have a high tinting strength relative to the materials they color, are stable in solid form at a broad temperature range, and can be distributed homogeneously in other materials, in particular, polymers. The term "pigment" as used herein also encompasses dyes, i.e., substances that are solved or are soluble in a carrier solution.

A **"rheological additive"** as used herein is a substance that modifies the rheological properties, in particular, the viscosity, of another substance, such as a liquid polymer mixture.

A **"separating agent"** as used herein is a substance adapted to separate components of a mixture such that the formation of clots is prevented. The separating agent can be a substance adapted to keep polymer granules being coated with pigments dispersed in oil from adhering to each other.

An **"extrusion polymer"** as used herein is a polymer that is adapted to use in manufacturing an artificial turf fiber in a process that comprises an extrusion step. An artificial turf fiber must be sufficiently elastic as well as rigid in order to produce an artificial turf with the desired properties. An extrusion polymer can be a mixture of one or more polymers. For example, the extrusion polymer can be polyethylene (PE), polyamide (PA), or a mixture thereof.

The polymer of the polymer granules, also referred to as **"injection molding polymer,"** is a polymer adapted to being used for manufacturing a color selection article in a manufacturing process that comprises an injection molding step. The polymer must melt at temperatures commonly used in injection molding, e.g., temperatures above 120°C and preferably above 200°C. In preferred embodiments, the injection molding step is a high temperature injection molding step performed at temperatures in the range of 300-450°C. The polymer needs to be liquid, and at the same time, chemically stable at the temperature range used for performing the injection molding. Preferably, the extrusion polymer and the injection molding polymer are preferably of the same type or of highly similar types with basically the same optical properties.

An **"artificial turf fiber sample"** as used herein is a product that comprises one or more artificial turf fibers of a defined thickness. For example, the artificial turf sample can consist of a single fiber, a bundle of fibers, or a piece of artificial turf comprising multiple fibers having the same fiber thickness. The sample is adapted to provide an idea of the mechanical properties, e.g., the fiber elasticity, rigidity, fiber orientation and density, pile height, etc., of the fibers and/or of the artificial turf to be produced.

**Brief description of the drawings**

In the following embodiments of the invention are explained in greater detail, by way of example only, making reference to the drawings, in which:

Figure 1    depicts a flow chart of a method for rapidly producing an artificial turf fiber having a defined color;

Figure 2    is a schematic drawing of a piece of artificial turf usable as an artificial turf fiber sample;

Figure 3    is a process chart illustrating various steps for creating an artificial turf fiber of a particular desired color;

Figure 4    depicts an injection-molded product;

Figure 5    depicts the injection-molded product and the color selection article manufactured therefrom from a different perspective;

Figure 6    is a photograph of two transparent color selection articles that partially overlap each other;

Figure 7    depicts a system comprising a color selection article with a stepped profile and two artificial turf fiber samples;

Figure 8    illustrates the generation of multiple color selection articles, each having a different pigment composition.

Figure 9    illustrates the manufacturing of an artificial turf fiber based on the pigment composition of a particular color selection article having the desired color.

**Detailed description**

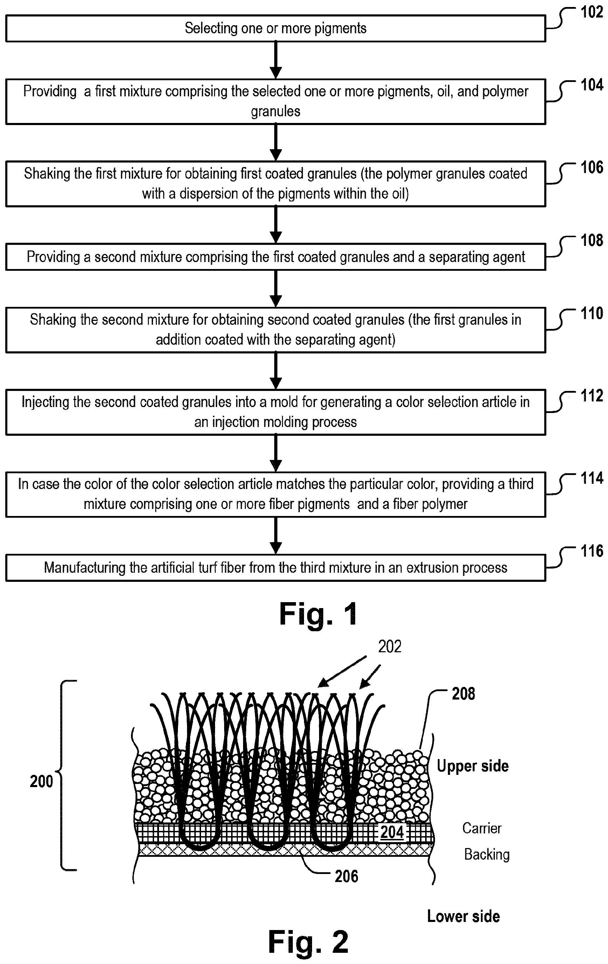

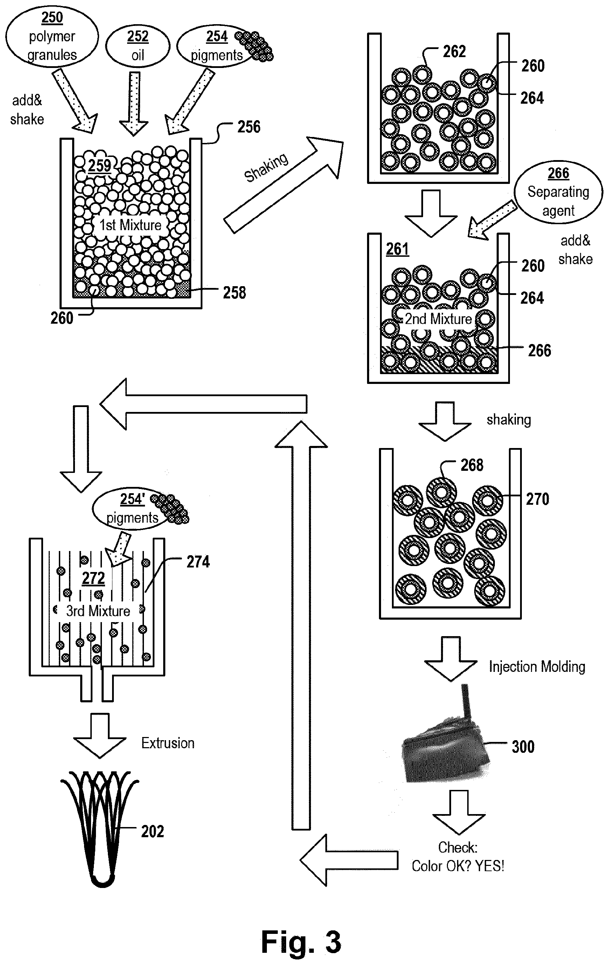

**Figure** 1 depicts a flow chart of a method for rapidly producing an artificial turf fiber having a defined color. **Figure** 3 is a graphic illustration of the method. In the following, the method of figure 1 will be described by making reference to elements of figure 3 also.

In a first optional step, a customer or an employee of an artificial turf fiber manufacturer may define a particular desired color. For example, a soccer club may order a new artificial turf, the fibers of which shall be manufactured in the color of the club logo. The club logo can be a special blue-green tone, for example. The representative of the soccer club can specify this blue-green tone as RGB or CMYK color value, or as a RAL number, or by providing a color sample in the form of a printed paper or a club article having the desired blue-green-color. Now, it is the task of a colorist to identify a combination of one or more different pigments and their respective weight ratio within a polymer mass that is able to reproducibly generate exactly the desired color. For example, based on his or her experience, the colorist may immediately recognize that the blue-green-tone may be generated by a mixture of a particular blue pigment, a particular green pigment and a particular white pigment, but he or she may not know the exact needed amounts of the three respective pigments. Hence, the exact pigment combination needed to generate the desired blue-green tone must be identified empirically in one or more tests. In state-of-the-art approaches, each test of a pigment combination required the generation of a pigment-polymer mixture in a sufficient amount to allow an extrusion machine to operate, and a thorough cleaning of the extrusion heads after the extrusion. To the contrary, embodiments of the invention allow for a rapid prototyping of an artificial turf fiber of the desired color. The process is "rapid" because a color combination is tested by means of an injection-molding process rather than an extrusion process. A specific way of shaking polymer granules with additional substances allows for a homogeneous distribution of pigments in a polymer mixture whose viscosity is low enough to allow the performance of an injection molding process, even with molds of less than $500\mu m$ thick.

First, in step 102, a user, typically a colorist trying to reproduce a particular color specified by a customer, selects one or more pigments 254. For example, the colorist may select a first amount of phthalocyanine blue (for the blue color), a second amount of phthalocyanine green (for the green color) and a third amount of titanium dioxide (white color).

Next, in step 104, the colorist produces a first mixture 259. The first mixture 259 is created by mixing the selected pigments 254, a colorless oil 252, and polymer granules 250, e.g. polyethylene granules, in a shaker 256. The shaker 256 can be either an automated shaker or a lockable container, e.g. a lockable cuplike container, that can be shaken manually by the colorist. Typically, the first mixture has a weight between 200 g and 800 g, preferably less than 500 g, e.g. about 200 g or 250 g. Next in step 106, the components of the first mixture 259 are shaken, and a pigment-in-oil dispersion 258, also referred to as "pigment-oil dispersion," is produced. The continuous shaking of the components of the first mixture results in a coating of each individual polymer granule 260 with a layer of the pigment-oil-dispersion. For example, the colorist can shake a closed, cuplike container 256 comprising about 220 g of the first mixture for about 1-3 minutes, e.g. for about 2 minutes, at room temperature. After this time, all polymer granules are coated with the pigment-oil-dispersion. The polymer granules 260 coated with a single layer 264 of the pigment-oil dispersion are referred herein as "first coated granules" 262.

Next, in step 108, a second mixture 261 is produced by adding, preferably under continuous shaking, the separating agent to the first coated granules. Then, the shaking is continued. The second mixture comprises the first coated granules 262 and the separating agent 266. The separating agent can be a single substance or a combination of two or more substances that can be added, either at the same time or subsequently.

Next, in step 110, the components of the second mixture are shaken, thereby producing what are referred to herein as "second coated granules" 268. The second coated granules are the first coated granules, which are in addition coated with the separating agent. The separating agent thus forms a second coating layer 270 around each first coated granule.

Next in step 112, the second coated granules are injected into a mold for manufacturing a color selection article 300 in an injection-molding process.

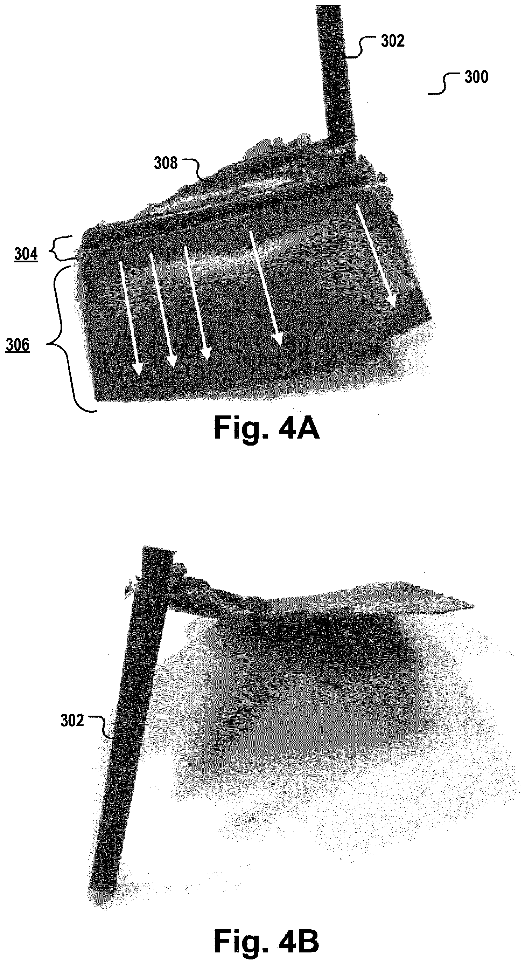

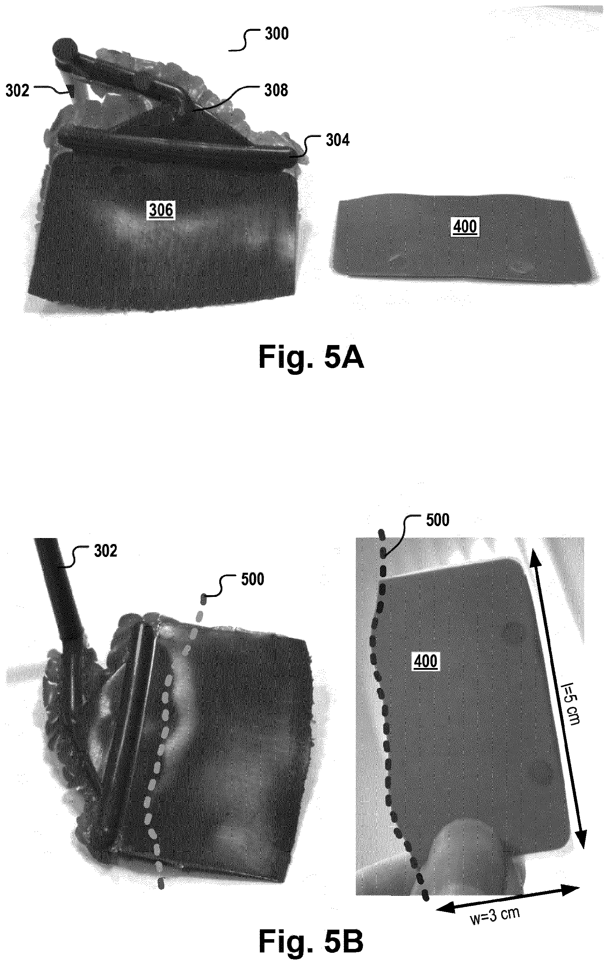

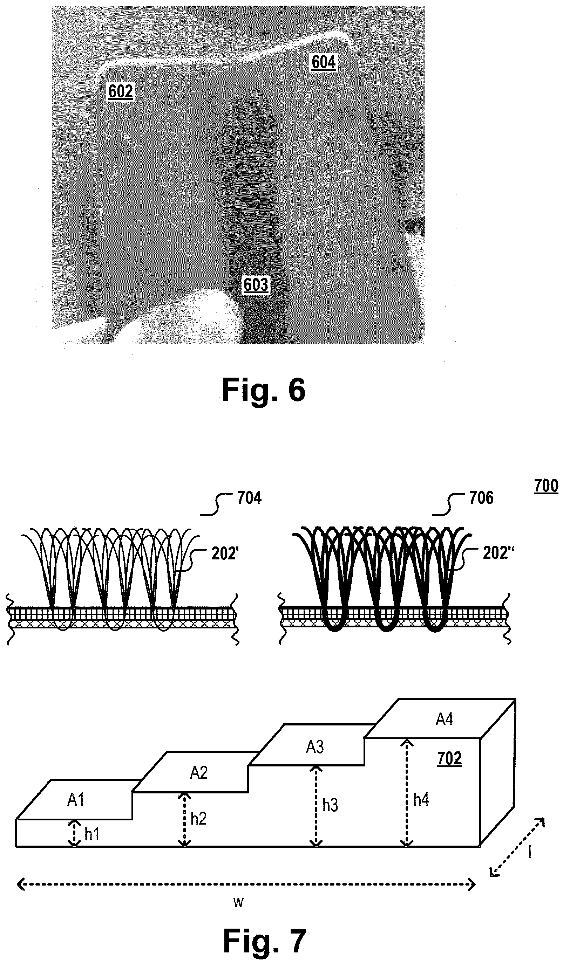

The injection step can be performed as a high-pressure injection molding operation. The injection step comprises heating the second coated granules such that the polymer of the polymer granules melts, producing a liquid polymer mass in which the selected pigments, the oil, and the separating agent are homogeneously distributed. For example, the injection molding process can be performed at temperatures of 220°C-265°C, preferably at about 250°C, and at pressures of 300-480 bar. The injection of the liquid second mixture can be performed via a duct illustrated by the protrusion 302 of the color selection article depicted in figures 4 and 5. When the polymer has hardened, the injection-molded product is removed from the mold and further processed, in particular by cutting, to produce a color selection article 400, as depicted in figures 4 and 5. As the mold for producing the color selection article is preferably very thin, specifically about 400μm or less, the color selection article can be semitransparent, as can be seen, for example, in figure 6. This produces a color selection article whose color faithfully reproduces the desired color of the artificial turf fibers to be manufactured. This color sample may prevent a situation in which a customer approves the color of the color selection article but refuses the color of the artificial turf fiber generated based on the same pigment combination because different degrees of transparency in the color selection article and the artificial turf fiber have been observed to have an impact on the color in some cases. Hence, the time and costs involved with producing artificial turf fibers of a desired color can be reduced.

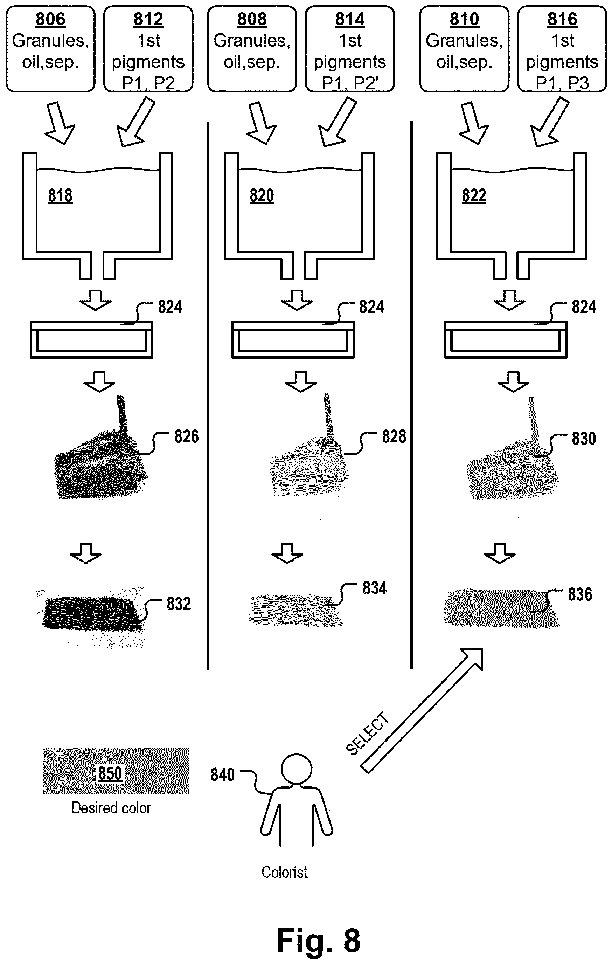

For example, an injection mold 824 as depicted, for example, in figure 8, can be used for manufacturing the color selection article. The mold can have a shape adapted to form an injection-molded product comprising at least a first area A1, A2, A3, A4, having a thickness h1, h2, h3, h4 in the range of plus/minus 20% of the fiber thickness of the artificial turf fiber. Preferably, the thickness of the first area is identical to the fiber thickness of the artificial turf fiber to be manufactured. An example of a color selection article comprising a stepped profile with multiple areas corresponding to different fiber thicknesses is depicted in figure 7. The use of thin injection molds presents a technical challenge because the comparatively viscous polymers typically used in an extrusion process are often too viscous to be used as injection-molding polymers, particularly for thin molds. However, as the oil and the separating agent ensure that the pigments are homogeneously distributed in the polymer, and as the oil reduces the viscosity of the polymer, embodiments of the invention may allow rapid testing of pigment combinations by means of an injection-molding process based on polymers such as polyethylene, polyamide, or polypropylene typically used for manufacturing artificial turf fibers in an extrusion process.

The polymer granules 250 are basically free of any pigment. The second mixture 261 can optionally comprise one or more additives, e.g. for reducing the viscosity of the second mixture and/or for improving the homogeneous distribution of the pigments in the second mixture. Preferably, the mixture is homogeneously mixed by a shaker rather than a stirrer, which may ensure that the pigment-oil coating 264 is not destroyed or damaged by a stirrer. The shaking can be performed either manually or by a machine.

Then, a human being, e.g. the colorist, either manually or by means of a computer program, checks whether the color of the color selection article is identical to, or at least sufficiently similar to the desired color. For example, the colorist may compare the color of the color selection article with a reference product of the desired color provided by the customer.

If the color of the color selection article is significantly different from the desired color, the colorist may immediately start testing a new pigment combination. For example, if the colorist observes that the color of the color selection article is significantly darker than the desired color, he or she may produce a new pigment combination comprising an additional type of white pigment or a greater amount of it. Then, a new color selection article is created as described, and the process is repeated until a color selection article and a respective pigment combination are identified that generate the desired color.

When the color of the color selection article produced is identical to the desired color or meets a minimum similarity threshold, a third mixture 272 is produced in step 114. This third mixture comprises one or more fiber pigments 254' and a fiber polymer 274. The fiber pigments used are of the same type of pigments as the selected one or more pigments 254, e.g. phthalocyanine blue (blue color), phthalocyanine green (green color) and titanium dioxide (white color). Typically, the amount of fiber polymer 274 to be used for producing an artificial turf fiber is much higher than the amount of polymer granules used for manufacturing the color selection article 300. Hence, the absolute amounts of the fiber pigments are typically much greater than the respective amounts of the one or more selected pigments used for manufacturing the color selection article. However, the relative amounts of the fiber pigments 254' to each other and relative to the fiber polymer 274 are preferably identical to, or at least sufficiently similar to, the relative amounts of the one or more selected pigments 254 to each other and relative to the polymer granules 250. This may ensure that the color of the artificial turf fiber 202 to be manufactured in a process comprising an extrusion step is identical or very similar to the color of the color selection article 300 considered to be identical to, or sufficiently similar to the desired color.

Preferably, the fiber polymer 274 is the same type of polymer as that of the polymer granules 250. For example, both types of polymers can be polyethylene.

Next in step 116, the artificial turf fiber is manufactured from the third mixture in an extrusion process. According to some embodiments, the third mixture 272 is extruded into a monofilament or film. The film can be split into multiple polymer slices. The monofilaments or slices can be further processed, e.g. stretched and/or texturized and/or combined into bundles of processed slices or monofilaments for manufacturing the artificial turf fibers 202.

The third mixture may comprise two different types of polymers, e.g. polyamide and polyethylene, and in this case can in addition comprise a compatibilizer that stabilizes an emulsion of one polymer within the other polymer once the third mixture is heated above the melting temperature of both polymers. The melt temperature used during extrusions is dependent upon the type of polymers and additives that are used but it is typically between 230°C and 280°C.

A monofilament, which can also be referred to as a filament or a fibrillated tape, is produced by feeding the third mixture 272 into a fiber-producing extrusion line. The melt mixture passes through the extrusion tool, i.e., a spinneret plate or a wide-slotted nozzle, forming the melt flow into a filament or tape form, and is quenched or cooled in a water spin bath, and dried and stretched by passing rotating heated godets with different rotational speed and/or a heating oven. The monofilament is then annealed online in a second step passing a further heating oven and/or set of heated godets. The stretching causes the monofilament to become longer

According to embodiments, incorporating the artificial turf fiber into the artificial turf backing comprises tufting the artificial turf fiber into the artificial turf backing and binding the artificial turf fibers to the artificial turf backing. For instance, the artificial turf fiber may be inserted with a needle into the backing and tufted the way a carpet may be. If loops of the artificial turf fiber are formed, they may be cut during the same step. Alternatively, incorporating the artificial turf fiber into the artificial turf backing comprises weaving the artificial turf fiber into the artificial turf backing. This technique for manufacturing artificial turf is known from United States patent application US 20120125474 A1. By using a weaving technique, it is possible to obtain a semi-random pattern in the carrier, which may give the artificial turf a natural appearance. Furthermore, weaving is a simpler technique than tufting, as the cutting of the fibers after their insertion into the carrier is eliminated. In tufting, the fiber is woven into the carrier first, subsequently looped on one side of the carrier, and cut. In weaving, after the fiber is woven into the carrier, the liquid backing is applied to the bottom side of the carrier as described above. The carrier can be, for example, a textile or a textile matt. A textile may be a flexible woven material consisting of a network of natural or artificial fibers often referred to as thread or yarn. Textiles are formed by weaving, knitting, crocheting, knotting, or pressing fibers together. In some embodiments, the third mixture, or components thereof, further comprises any one of the following: a dulling agent, an ultraviolet stabilizer, a flame retardant, an antioxidant, antimicrobial substances, and combinations thereof. These listed additional components may be added to the third mixture to give the artificial turf fibers other desired properties, such as flame retardancy or stability in sunlight. Typically, these additional substances have no significant effect on the optical properties of the artificial turf fibers, at least not within the wavelength spectrum visible by the human eye, i.e., between about 390 and 700 nm.

A plurality of the artificial turf fibers are arranged in a carrier in such a way that first parts of the monofilaments of the arranged artificial turf fibers are exposed to the bottom side of the carrier and second parts of said monofilaments are exposed to the upper side of the carrier. At minimum, first fiber portions are embedded in and mechanically fixed by a solid film that is a solidified fluid, e.g. a solidified latex film or a cured PU reaction mixture film, and acts as the artificial turf backing.

The above-described approach may allow for manufacturing a color selection article for testing a particular pigment combination within 10 to 20 minutes. Instead of consuming 2 to 3 kg of polymer and respective amounts of pigments for manufacturing a master batch granulate in an extrusion process, or even consuming 10 kg of polymer for manufacturing an extruded polymer film, only 200 to 300 g of polymer and respective amounts of pigments are consumed. For example, the following amounts may be used for manufacturing the second coated granules that are injected into a mold for producing a color selection article:

- 200 g polyethylene granules
- $\leq$ 0.5 g oil
- 1-15 g pigments
- 0.5-0.7 g PE wax, e.g. 0.6 g PE-wax
- 1.5-2.5 g chalk, e.g. 2.0 g. chalk

**Figure 2** shows a cross-section of a piece of artificial turf 200. Small pieces of artificial turf can be used as artificial turf samples or artificial turf fiber samples, allowing the customer a visual as well as a haptic impression of a particular type of artificial turf. The artificial turf 200 comprises an artificial turf backing 206 and a carrier 204, e.g., a synthetic fiber mesh. The backing can be, for example, a hardened polyurethane or latex mixture that incorporates some portions of the fibers protruding to the lower side of the carrier. According to some embodiments, the artificial turf fibers 202 have been tufted, knitted, or woven into the carrier 204. The artificial turf fibers 202 correspond to the fiber portions protruding to the upper side from the carrier. According to other embodiments (not shown), the artificial turf fiber sample consists merely of a single artificial turf fiber of a particular thickness, or of a bundle of fibers having the same thickness. Thus, an artificial turf fiber sample can enable a potential customer to get an impression of the thickness, elasticity, and rigidity of its fiber, but not necessarily of its color. If the fiber sample is an actual piece of artificial turf, the potential customer may in addition get an impression of its fiber density, distribution, and integration tilt, as well as its pile height and overall weight.

**Figures 4A and 4B** are two photographs of an injection-molded product 300 taken from two perspectives. The product 300 has been freshly removed from an injection mold and still comprises some edges and frayed material that need to be removed. As the profile of the mold corresponds to the profile of the injection-molded product fabricated therein, in the following description, features of the injection-molded product as well as the corresponding features of the mold will be described by making reference only to the depicted injection-molded product 300.

The injection-molded product 300 comprises a protrusion 302 that corresponds to an inbound duct used for injecting the molten second coated granules 268, i.e., a molten polymer mass comprising homogeneously distributed pigments, oil, and the separating agent, via said duct into the mold. The product 300 further comprises a tubular thickening 304 that corresponds to a respective tubular thickening of the mold and that allows the injected liquid polymer to spread quickly and homogeneously via the thickening over the whole width of the mold before it enters the body of the mold. The body of the mold corresponds to and shapes the body 306 of the injection-molded product 300. The mold and the injection-molded product 300 fabricated therein can further comprise a region 308 between the duct 302 and the ends of the tubular thickening 304. The region 308 allows the injected liquid polymer to quickly leave the duct and homogeneously spread over the whole width of the thickening 304. For example, the region 308 can be triangle-shaped.

According to preferred embodiments, the body of the mold and the corresponding body 306 of the injection-molded product 300 have a tapered shape, e.g. the shape of a wedge or of a stair comprising two or more steps of different heights. Thereby, the side/edge of the body 306 connecting to the tubular thickening 304 are higher (thicker) than the edge of the body 306 opposed to the thickening 304. This may be advantageous, as the shape of the body of the mold and the thickened duct (corresponding to the tubular thickening 304) directly connected to an inbound duct (corresponding to protrusion 302) contained in the mold may cause the injected liquid polymer to spread within the mold in a basically laminar flow as indicated by the parallel white arrows. This may be advantageous, as the flow of the liquid polymer within the injection mold "simulates" the basically laminar flow of an extruded polymer mass. In some embodiments, the orientation of the flow of the polymer mass during the extrusion has an impact on the appearance of the surface of an artificial grass fiber.

**Figures 5A and 5B,** respectively, depict the injection-molded product 300 of figure 4 in different perspectives and a color selection article 400 manufactured therefrom. The article 400 is manufactured by cutting the injection-molded product 300 along the separation line 500 indicated in figure 5B. According to some examples, the color selection article 400 has a length l of about 3-8 cm, a width w of about 2-5 cm, and a height h (or "thickness") of about 100$\mu$m-500 $\mu$m. In some example embodiments, the thickening 304 and the corresponding duct in the mold have a diameter of 0.2 mm-0.8 mm, preferably 0.3 mm-0.6 mm.

**Figure 6** is a photograph of two transparent color selection articles 602 and 604 held against a light source. As can be inferred from the significantly darker portion 603 of the articles where the two articles partially overlap each other, the articles are thin enough to allow at least some light to pass through the articles. Thus, according to some embodiments, the color selection articles are transparent. This may be advantageous, as it allows a customer to get a more realistic idea of the color and appearance of the artificial turf fiber that will be produced if he or she selects a particular color selection article, because the color selection article has the same thickness and transparency as the artificial turf fiber to be created based on the customer's color selection.

**Figure 7** depicts a color selection article 702 with a stepped profile. The color selection article 702 can be produced as an element of a system 700, comprising in addition one or more artificial turf fiber samples 704, 706. The height ("thickness") h1 corresponding to area A1 may be 100$\mu$m, the height h2 corresponding to area A2 may be 150$\mu$m, the height h3 corresponding to area A3 may be 200$\mu$m, and the height h4 corresponding to area A4 may be 250$\mu$m. According to some embodiments, the length l of the article 702 is about 3-8 cm and the width w is about 2-5 cm.

The artificial turf fiber sample 704 can be a piece of artificial turf comprising artificial turf fibers 202' having a thickness of only 150$\mu$m. This sample 704 can be used to provide a potential customer with an idea of the elasticity, rigidity, orientation, and density of the artificial turf fibers offered by a manufacturer. However, this sample 704 is not used for enabling the customer to make a color selection, as it may be impossible, or at least inconvenient, to produce an artificial turf fiber sample for every possible pigment combination. However, the customer may use the area A2 of one or more color selection articles to get an idea of the color of the artificial turf fibers 202' if he or she were to select the color of the color selection article 704 as the color of the fiber to be produced. The thickness h2 of the color selection article 702 is 150$\mu$m and thus is identical or very close to the thickness of the artificial fiber sample 704. In particular, it will have the same degree of transparency as the fiber 202'

of the artificial turf fiber sample 704.

The artificial turf fiber sample 706 can be a piece of artificial turf comprising artificial turf fibers 202" having a thickness of about 250 $\mu$m. This sample 706 can be used to provide a potential customer with an idea of the elasticity, rigidity, orientation, and density of the artificial turf fibers of this thickness, which may also be offered by the manufacturer. The sample 706 is not used for enabling the customer to select a particular color; rather, it is used for enabling the customer to get an idea of the color of the artificial turf fibers 202" if he or she were to select the color of the color selection article 706 as the color of the fiber to be produced. The thickness h4 of the color selection article 702 is 250$\mu$m, which is identical or very close to the thickness of the artificial fiber sample 706. In particular, it will have the same degree of transparency as the fiber 202" of the artificial turf fiber sample 706.

**Figure 8** illustrates the generation of multiple color selection articles 832, 834, 836 respectively, each having a different composition of pigments and thus, a different color. Each of the color selection articles corresponds to a respective pigment combination and to a test of whether that pigment combination is able to generate a color selection article of the desired color. The different color selection articles can be manufactured consecutively, fine-tuning the pigment composition such that the color of the color selection article becomes closer to the desired color until a color is achieved that is basically identical to the desired color. In addition, or alternatively, the colorist may also fabricate multiple color selection articles in parallel, each having a similar, but not identical, pigment combination. This use of multiple series may further reduce the time needed to identify the desired pigment combination, because multiple pigment combinations can be tested in parallel, but it requires the availability of multiple molds.

For example, a customer may request an artificial turf made of an artificial turf fiber having a particular color, e.g., a blue-green color 850 specified as a RAL value or CMYK value.

A colorist 840, based on many years of experience, may expect that a particular mixture of a blue pigment P1 and a green pigment P2 may generate the desired color, but he or she may not be sure about the exact amounts of the two pigments. Hence, the colorist creates a first pigment combination 812, which is subsequently combined with all other components 812 used for manufacturing the second coated granules, i.e., the oil, the polymer granules and the separating agent under shaking as described herein for embodiments of the invention (see, for example, the description of figures 1 and 3). Thereby, a second mixture 818 is created that is used for manufacturing second coated granules. The second coated granules are injected into a mold by means of a high pressure injection molding process to manufacture the injection-molded product 826, which again is used for creating a color selection article 832 having a particular color. Instead of, or in addition to, his or her many years of experience, a colorist may also use computer software or paper-based catalogs in order to identify pigment composition candidates that will generate a color similar to the desired color use as a starting point for fine-tuning a pigment composition.

In addition, the colorist creates a second pigment combination 814 that comprises the identical types of pigments, but has a slightly different amount of the green pigment P2 (indicated as P2'). The second pigment combination is subsequently combined with all other components 818 used for manufacturing the second coated granules, i.e., the oil, the polymer granules and the separating agent under shaking as described above). Thereby, a second mixture 820 is created that is used for manufacturing second coated granules. The second coated granules are injected into a mold in a high pressure injection molding process for manufacturing the injection-molded product 828 which again is used for creating a color selection article 834 having a particular color.

In addition, the colorist creates a third pigment combination 816 that comprises the same type and amount of the blue pigment P1, but comprises a different type of green pigment (P3 instead of P2). The third pigment combination is subsequently combined with all other components 810 used for producing the second coated granules, i.e., the oil, the polymer granules and the separating agent under shaking as described above). Thereby, a second mixture 818 is created that is used for producing second coated granules. The second coated granules are injected into a mold in a high pressure injection molding process for manufacturing the injection-molded product 830, which again is used for creating a color selection article 836 having a particular color.

Then, the colorist may compare the colors of the color selection articles 832, 834, 836 with the desired color 850 specified by the customer and may determine that the color of color selection article 836 is identical to the desired color 850. In this case, the pigment combination P1, P3 and the relative weight ratio of those pigments to the polymer generates the desired color. Hence, the colorist or his or her colleague can then produce a third mixture comprising an extrusion polymer and the pigments P1, P3 in the same relative amounts as used for manufacturing the color selection article 836 and extrude this third mixture into a monofilament or film that is further processed into an artificial turf fiber having the desired color 850.

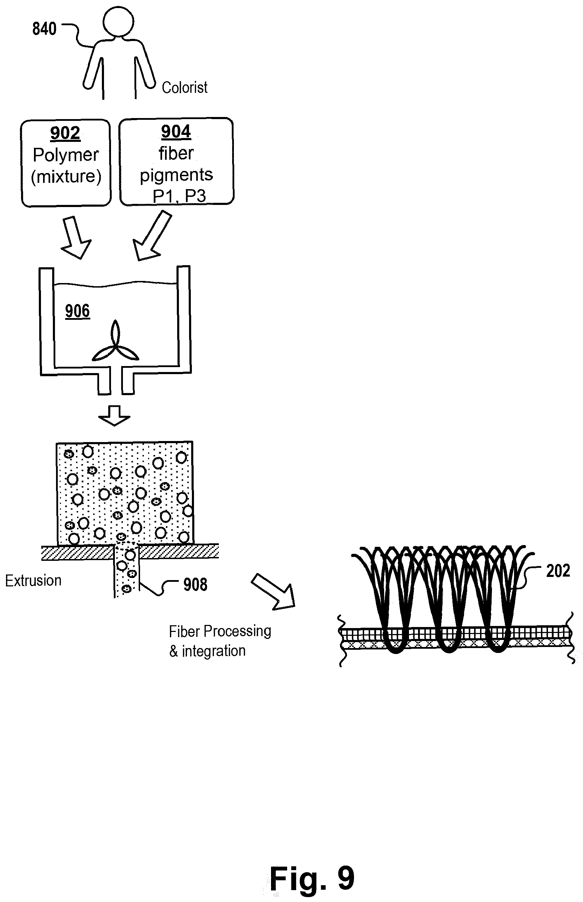

**Figure 9** illustrates the manufacturing of an artificial turf fiber 202 having the desired color 850 that was faithfully reproduced by the color selection article 836.

The color selection article 836 corresponds to a pigment combination comprising a defined amount of first pigments P1, P3 816 homogeneously distributed within an injection-molding polymer, e.g. polyethylene, provided in the form of polymer granules. The colorist 840 may select the same type of polymer 902, e.g. polyethylene, and mix it with the same relative amount of the pigments P1, P3 referred herein as "fiber pigments" 904. Optionally, the third mixture 906 comprising or basically consisting of the fiber polymer 902 and the fiber pigments 904 may comprise additional substances that do not have a significant impact on the color in the visible spectral range.

The third mixture can be created by mixing all components in a container of the extrusion machine at the same time. Alternatively, some of the components may already be combined and mixed before for creating a so called "master batch" that is later mixed with the other components of the third mixture to create the third mixture that is extruded into the monofilament or film used for producing the artificial turf fiber. The creation of the master batch can be performed in an initial extrusion step.

The third mixture is extruded by an extrusion process into a monofilament 908. The monofilament is processed, e.g. quenched, reheated, stretched, and optionally texturized to produce an artificial turf fiber 202 that is later incorporated into a carrier to produce an artificial turf, the fibers of which have the desired color 850.

List of reference numerals

| | |
|---|---|
| 102-116 | steps |
| 200 | artificial turf fiber sample |
| 202 | artificial turf fibers |
| 204 | carrier |
| 206 | backing |
| 250 | polymer granules |
| 252 | oil |
| 254 | pigments |
| 254' | fiber pigments |
| 256 | container/shaker |
| 258 | pigment-in-oil dispersion |
| 259 | first mixture |
| 260 | individual polymer granule |
| 261 | second mixture |
| 262 | first coated granule |
| 264 | first coating (pigment-in-oil-dispersion) |
| 266 | separating agent |
| 268 | second coated granules |
| 270 | second coating (separating agent) |
| 272 | third mixture |
| 274 | fiber polymer |
| 300 | injection-molded product |
| 302 | protrusion corresponding to the inbound duct of the mold |
| 304 | tubular thickening |
| 306 | body of the injection-molded product |
| 308 | triangle-shaped region between the duct 302 and the ends of the tubular thickening 304 |
| 400 | color selection article |
| 500 | separation line |
| 602 | color selection article |
| 603 | overlap zone |
| 604 | color selection article |
| 700 | system |
| 702 | color selection article with stepped profile |
| 704 | artificial turf fiber sample |
| 706 | artificial turf fiber sample |
| 806 | polymer for injection molding |
| 808 | polymer for injection molding |
| 810 | polymer for injection molding |
| 812 | first pigments P1, P2 |
| 814 | first pigments P1, P2' |
| 816 | first pigments P1, P3 |
| 818 | injection molding mixture |
| 820 | injection molding mixture |
| 822 | injection molding mixture |
| 824 | injection mold |
| 826 | injection-molded product having a first color |
| 828 | injection-molded product having a second color |
| 830 | injection-molded product having a third color |
| 832 | color selection article having the first color |
| 834 | color selection article having the second color |
| 836 | color selection article having the third color |
| 840 | colorist |
| 902 | polymer for extrusion |
| 904 | fiber pigments |
| 906 | third mixture/extrusion mixture |
| 908 | extruded monofilament |

**Claims**

1. A method of manufacturing an extruded artificial turf fiber (202) of a particular color, the method comprising:

- selecting (102) one or more pigments (254);
- providing (104) a first mixture (259), the first mixture comprising the selected one or more pigments, oil (252), and polymer granules (250);
- shaking (106) the first mixture to obtain first coated granules (262), the first coated granules being the polymer granules coated with a dispersion of the selected one or more pigments within the oil;
- providing (108) a second mixture (261), the second mixture comprising the first coated granules (262) and a separating agent (266);
- shaking (110) the second mixture to obtain second coated granules (268), the second coated granules being the first granules additionally coated with the separating agent;
- injecting (112) the second coated granules into a mold to manufacture a color selection article by an injection-molding process;
- if the color of the color selection article matches the particular color, providing (114) a third mixture (274), the third mixture comprising one or more fiber pigments (254') and a fiber polymer, the one or more fiber pigments being the same type of pigments as the selected one or more pigments, the fiber polymer being the same type of polymer as the polymer of the polymer granules (250); and
- manufacturing (116) the artificial turf fiber from the third mixture by an extrusion process.

2. The method of claim 1, the weight ratio of the fiber pigments to the fiber polymer being identical to the weight ratio of the one or more selected pigments to the polymer granules.

3. The method of any one of the preceding claims, the fiber polymer and the polymer granules being the same type of polymer selected from a group comprising polyethylene, polypropylene, polyamide, or a mixture thereof.

4. The method of any one of the preceding claims, the second mixture in molten state during injection molding having a melt flow index of 2.0-3.0 grams/10 minutes, in particular 2.5 grams/10 minutes.

5. The method of any one of the preceding claims, the generation of the artificial turf fiber from the third mixture comprising extruding the third mixture into a monofilament and using the monofilament or a bundle of monofilaments as the artificial turf fiber.

6. The method of any one of the preceding claims 1-4, the generation of the artificial turf fiber from the third mixture comprising extruding the third mixture into a film, slicing the film into slices, and using one or more of the slices as the artificial turf fiber.

7. The method of any one of the preceding claims, wherein the oil is a transparent oil, preferably a colorless oil.

8. The method of any one of the preceding claims, wherein the separating agent is a mixture of wax and chalk.

9. The method of claim 8, wherein the wax is polyethylene-wax.

10. The method of any one of the preceding claims, the ratio of the weight of the oil to the weight of the polymer granules being in the range of $\frac{0.05}{200}$ to $\frac{2.5}{200}$, in particular $\frac{0.25}{200}$ to $\frac{0.6}{200}$, preferably $\frac{0.5}{200}$.

11. The method of any one of the preceding claims, the ratio of the total weight of the one or more selected pigments to the weight of the polymer granules being in the range of $\frac{0.3}{200}$ to $\frac{25}{200}$, in particular $\frac{1}{200}$ to $\frac{15}{200}$.

12. The method of any one of the preceding claims, the ratio of the weight of the wax to the weight of the polymer granules being in the range of $\frac{0.3}{200}$ to $\frac{1.5}{200}$, in particular $\frac{0.5}{200}$ to $\frac{0.7}{200}$.

13. The method of any one of the preceding claims, the ratio of the weight of the chalk to the weight of the polymer granules being in the range of $\frac{0.5}{200}$ to $\frac{5}{200}$, in particular $\frac{1.5}{200}$ to $\frac{2.5}{200}$.

14. The method of any one of the preceding claims, the second mixture in total having a weight of less than 500 g, but preferably less than 250 g.

15. The method of any one of the preceding claims, the second mixture comprising:

- 0.227%-0.25% by weight the oil;
- 0.45%-7.4% by weight the one or more selected pigments;
- 0.227%-0.34% by weight wax;
- 0.68%-1.23% by weight the chalk, the wax and the chalk in combination acting as the separating agent;
- more than 90% by weight the polymer granules.

16. The method of any one of the preceding claims, further comprising:

- selecting one or more further pigments (254), the one or more further pigments differing in type and/or amount of at least one pigment from the one or more selected pigments;
- providing a further first mixture, the further first mixture comprising the selected one or more further pigments, further oil, and further polymer granules;
- shaking the further first mixture for obtaining further first coated granules, the further first coated granules being the further polymer granules coated with a dispersion of the selected one or more further pigments within the further oil;
- providing a further second mixture, the further second mixture comprising the further first coated granules and a further separating agent;

- shaking the further second mixture for obtaining further second coated granules, the further second coated granules being the further first granules, being in addition coated with the further separating agent;

- injecting the further second coated granules into a mold to manufacture a further color selection article in an injection molding process;

- if the color of the further color selection article is closer to the desired color than the color of the color selection article, producing the third mixture (274) such that the one or more fiber pigments are the same type of pigments as the selected one or more further pigments.

17. A color selection article to aid in selecting the color of an artificial turf fiber (202), the color selection article being an injection-molded polymer product comprising:

- one or more pigments (254);
- oil (252), and
- a separating agent (266), the separating agent being adapted to keep polymer granules coated with a dispersion of pigments in oil separate from one another.

| | |
|---|---|
| Selecting one or more pigments | 102 |
| Providing a first mixture comprising the selected one or more pigments, oil, and polymer granules | 104 |
| Shaking the first mixture for obtaining first coated granules (the polymer granules coated with a dispersion of the pigments within the oil) | 106 |
| Providing a second mixture comprising the first coated granules and a separating agent | 108 |
| Shaking the second mixture for obtaining second coated granules (the first granules in addition coated with the separating agent) | 110 |
| Injecting the second coated granules into a mold for generating a color selection article in an injection molding process | 112 |
| In case the color of the color selection article matches the particular color, providing a third mixture comprising one or more fiber pigments and a fiber polymer | 114 |
| Manufacturing the artificial turf fiber from the third mixture in an extrusion process | 116 |

## Fig. 1

## Fig. 2

**Fig. 3**

**Fig. 4A**

**Fig. 4B**

**Fig. 5A**

**Fig. 5B**

**Fig. 6**

**Fig. 7**

**806**
Granules, oil, sep.

**812**
1st pigments P1, P2

**808**
Granules, oil, sep.

**814**
1st pigments P1, P2'

**810**
Granules, oil, sep.

**816**
1st pigments P1, P3

_818_

_820_

_822_

824

824

824

826

828

830

832

834

836

SELECT

_850_
Desired color

840

Colorist

**Fig. 8**

21

840 — Colorist

**902**
Polymer
(mixture)

**904**
fiber
pigments
P1, P3

**906**

Extrusion

**908**

Fiber Processing
& integration

202

**Fig. 9**

Europäisches
Patentamt

European
Patent Office

Office européen
des brevets

# EUROPEAN SEARCH REPORT

Application Number

EP 18 17 4153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 100 780 229 B1 (LEE TAE HEUNG [KR]; LEE JAE CHUN [KR]) 28 November 2007 (2007-11-28) | 17 | INV. D01F1/04 B29C45/00 C08J3/20 |
| A | * abstract; claims * | 1-16 | C08J3/205 E01C13/08 |
| A | US 2007/059844 A1 (HARPER JAMES E [US] ET AL) 15 March 2007 (2007-03-15) * paragraphs [0001], [0086], [0196]; claims * | 1-17 | |
| X | US 2002/036950 A1 (COSMAN JEFFREY M [US] ET AL) 28 March 2002 (2002-03-28) | 17 | |
| A | * paragraphs [0024], [0026], [0031], [0035], [0102], [0105]; claims * | 1-16 | |
| A | CN 105 461 944 A (CHANGSHU HUAXI PLASTIC PRODUCTS CO LTD) 6 April 2016 (2016-04-06) * claims * | 1-17 | |

TECHNICAL FIELDS
SEARCHED (IPC)

D01F
B29C
C08J
E01C

The present search report has been drawn up for all claims

| Place of search | Date of completion of the search | Examiner |
|---|---|---|
| The Hague | 22 November 2018 | Blas, Valérie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 4153

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2018

| Patent document cited in search report | | Publication date | Patent family member(s) | | | Publication date |
|---|---|---|---|---|---|---|
| KR 100780229 | B1 | 28-11-2007 | NONE | | | |
| US 2007059844 | A1 | 15-03-2007 | US | 2007059844 | A1 | 15-03-2007 |
| | | | WO | 2007033186 | A2 | 22-03-2007 |
| US 2002036950 | A1 | 28-03-2002 | AU | 6853201 | A | 08-01-2002 |
| | | | CN | 1447716 | A | 08-10-2003 |
| | | | EP | 1294475 | A1 | 26-03-2003 |
| | | | KR | 20030036228 | A | 09-05-2003 |
| | | | US | 2002036950 | A1 | 28-03-2002 |
| | | | US | 2004190369 | A1 | 30-09-2004 |
| | | | WO | 0200335 | A1 | 03-01-2002 |
| CN 105461944 | A | 06-04-2016 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120125474 A1

**Non-patent literature cited in the description**

- **RUSHEET, SD.** Application of Nanoparticle Saturated Injectant Gases for EOR of Heavy Oils. *SPE,* 2009, 129539